Europäisches Patentamt

European Patent Office

Office européen des brevets

(19)

(11) Veröffentlichungsnummer: **0 129 796**
**B1**

(12) # EUROPÄISCHE PATENTSCHRIFT

(45) Veröffentlichungstag der Patentschrift:
07.09.88

(51) Int. Cl.⁴: **C 08 L 25/12, C 08 L 25/16,**
**C 08 L 51/04**

(21) Anmeldenummer: 84106859.6

(22) Anmeldetag: 15.06.84

(54) Thermoplastische Formmasse.

(30) Priorität: 24.06.83 DE 3322748

(43) Veröffentlichungstag der Anmeldung:
02.01.85 Patentblatt 85/01

(45) Bekanntmachung des Hinweises auf die Patenterteilung: 07.09.88 Patentblatt 88/36

(84) Benannte Vertragsstaaten:
BE DE FR GB NL

(56) Entgegenhaltungen:
EP-A- 0 074 051
US-A- 3 449 470
US-A- 4 169 869

(73) Patentinhaber: BASF Aktiengesellschaft
Carl-Bosch-Strasse 38
D-6700 Ludwigshafen (DE)

(72) Erfinder: Mitulla, Konrad, Dr.
An der Froschlache 23
D-6700 Ludwigshafen (DE)
Erfinder: Swoboda, Johann, Dr.
Neuwiesenstrasse 28
D-6700 Ludwigshafen (DE)
Erfinder: Priebe, Edmund, Dr.
Bensheimer Ring 7 a
D-6710 Frankenthal (DE)
Erfinder: Ruppmich, Karl
Koenigsbacher Strasse 134
D-6700 Ludwigshafen (DE)
Erfinder: Echte, Adolf, Dr.
Leuschnerstrasse 42
D-6700 Ludwigshafen (DE)
Erfinder: Overhoff, Heinz-Juergen, Dr.
Max-Slevogt-Strasse 13 b
D-6710 Frankenthal (DE)

EP 0 129 796 B1

**Beschreibung**

Die Erfindung betrifft eine thermoplastische Formmasse aus einem schlagfesten Harz, insbesondere einem ABS-Polymerisat, und einem Nitrilkautschuk.

Zum Stand der Technik nennen wir:

(1) US-A-3 449 470 und
(2) US-A-4 169 869.

Aus (1) und (2) sind thermoplastische Harze auf Basis von ABS bekannt, die beim Extrudieren Gegenstände mit matter Oberfläche liefern. In den bekannten Formmassen wird zur Erzielung der Mattigkeit der Oberfläche ein Gemisch aus zwei unterschiedlichen Kautschuken, nämlich einem Nitrilkautschuk und einem überwiegend der ganz aus Polybutadien bestehenden Kautschuk angewendet. Die bekannten Formmassen weisen insbesondere niedrige Schlagzähigkeiten, insbesondere niedrigere Kälteschlagzähigkeiten auf und sind recht kompliziert aufgebaut.

Es bestand daher die Aufgabe, matte ABS-Harze herzustellen, die einfacher aufgebaut sind, z. B. nur einen Nitrilkautschuk benötigen, und leichter zu handhaben sind, d. h. z. B. ohne die Verwendung von Peroxid-Zusätzen auskommen.

In der EP-A 1 74 051 ist eine Formmasse aus einer Hartmatrix, z. B. einem S/AN-Copolymerisat, und zwei unterschiedlichen Pfropfmischpolymerisaten beschrieben. Das eine Pfropfmischpolymerisat ist auf Basis von ABS aufgebaut und wird durch zweistufige Pfropfung eines zuvor agglomerierten Butadienlatex hergestellt. Das andere Pfropfmischpolymerisat ist auf Basis eines vorwiegend Acrylat enthaltenden Copolymerisates als Kautschuk aufgebaut. Der Kautschuklatex kann gegebenenfalls agglomeriert werden und wird danach einstufig gepfropft. Die bekannte Formmasse weist bei einem allgemein ausgewogenen Eigenschaftsbild eine hohe Zähigkeit und eine verminderte Eigenfarbe, gemessen durch den Yellowness-Index, auf.

Die Aufgabe wird gelöst durch eine Formmasse gemäß Patentanspruch 1.

Die Erfindung betrifft eine thermoplastische Formmasse, bestehend im wesentlichen aus

A einem schlagfesten Harz, das aufgebaut ist aus

$A_1$ mindestens einem Copolymerisat in einem Anteil von 40 bis 80 Gew.-%, bezogen auf A, aus Styrol und/oder $\alpha$-Methylstyrol mit Acrylnitril, wobei dieses Copolymerisat 20 bis 40 Gew.-% Acrylnitril einpolymerisiert enthält

sowie

$A_2$ mindestens einem Pfropfmischpolymerisat in einem Anteil von 60 bis 20 Gew.-%, bezogen auf A, das Styrol und Acrylnitril im Gewichtsverhältnis von 80/20 bis 65/35 auf mindestens einen, nur aus Butadien aufgebauten, Kautschuk aufgepfropft enthält, wobei der Kautschukgehalt 40 bis 80 Gew.-%, bezogen auf $A_2$, beträgt

und

B einem aus Acrylnitril und Butadien bestehenden Kautschuk in einem Anteil von 1 bis 20 Gew.-Teilen, bezogen auf 100 Gew.-Teile von A, der aufgebaut ist aus 5 bis 40 Gew.-% Acrylnitril und 95 bis 60 Gew.-% Butadien, jeweils bezogen auf B, gegebenenfalls enthaltend

C übliche Zusatzstoffe dadurch gekennzeichnet,

daß das Pfropfmischpolymerisat $A_2$ durch Emulsions-Polymerisation (Pfropfen) von Styrol und Acrylnitril auf einen in Emulsion hergestellten Polybutadienlatex erzeugt wurde, dessen Teilchen vor der Pfropfung in an sich bekannter Weise durch Agglomeration vergrößert worden sind, so daß

70 bis 97 % der Teilchen (Zahlenmittel) im nicht agglomerierten Zustand vorliegen und eine mittlere Teilchengröße ($d_{50}$-Wert der integralen Masseverteilung) von 0,04 bis 0,08 μm aufweisen.

und

30 bis 3 % der Teilchen (Zahlenmittel) im agglomerierten Zustand vorliegen, und eine mittlere Teilchengröße ($d_{50}$-Wert der integralen Masseverteilung) von 0,20 bis 0,50 μm besitzen.

Die erfindungsgemäße Formmasse besitzt einen einfacheren Aufbau als die aus (1) oder (2) bekannten Formmassen und weist unerwartet eine höhere Kältezähigkeit und eine verbesserte Fließfähigkeit, insbesondere bei höheren Verarbeitungstemperaturen, gegenüber den bekannten Formmassen auf.

Nachstehend werden die Komponenten der erfindungsgemäßen Formmasse, deren Herstellung und die Herstellung der Formmasse beschrieben.

Komponente A

Die Komponente A repräsentiert ein schlagfestes Harz, das aus mindestens einem Copolymersat $A_1$ (Hartkomponente) und mindestens einem Pfropfmischpolymerisat $A_2$ (Weichkomponente) aufgebaut ist.

Die Komponente $A_1$ ist in einem Anteil von 40 bis 80 Gew.-%, insbesondere von 45 bis 65 Gew.-%,

**0 129 796**

bezogen auf A, in der erfindungsgemäßen Formmasse vorhanden.

Die in der erfindungsgemäßen Formmasse enthaltende Komponente $A_1$ ist eine Hartkomponente aus einem oder mehreren Copolymerisation von Styrol und/oder $\alpha$-Methylstyrol mit Acrylnitril. Der Acrylnitril-Gehalt in diesen Copolymerisaten der Hartkomponente $A_1$ beträgt 20 bis 40 Gew.-%, insbesondere 23 bis 35 Gew.-%, bezogen auf das jeweilige Copolymerisat der Hartkomponente. Zu dieser Hartkomponente $A_1$ zählen auch wie weiter unten erläutert, die bei der Pfropfmischpolymerisation zur Herstellung der Komponenten $A_2$ entstehenden freien, nicht gepfropften Styrol/Acrylnitril-Copolymerisate. Je nach den bei der Pfropfmischpolymerisation für die Herstellung der Pfropfmischpolymerisate $A_1$ gewählten Bedingungen kann es möglich sein, daß bei der Pfropfmischpolymerisation schon ein hinreichender Anteil an Hartkomponente $A_1$ gebildet worden ist. Im allgemeinen wird es jodch nötig sein, die bei der Pfropfmischpolymerisation erhaltenen Produkte mit zusätzlicher, separat hergestellter Hartkomponente $A_1$ zu mischen.

Bei der separat hergestellten Hartkomponente $A_1$ kann es sich um ein Styrol/Acrylnitril-Copolymerisat, ein $\alpha$-Methylstyrol/Acrylnitril-Copolymerisat oder ein $\alpha$-Methylstyrol/Styrol/Acrylnitril-Terpolymerisat handeln. Diese Copolymerisate können einzeln oder auch in Mischung miteinander für die Hartkomponente eingesetzt werden, so daß es sich bei der Hartkomponente $A_1$ der erfindungsgemäßen Mischungen beispielsweise um eine Mischung aus einem Styrol-Acrylnitril-Copolymerisat und einem $\alpha$-Methylstyrol/Acrylnitril-Copolymerisat handeln kann. In dem Fall, in dem die Hartkomponente $A_1$ der erfindungsgemäßen Massen aus einer Mischung von einem Styrol/Acrylnitril-Copolymerisat und einem $\alpha$-Methylstyrol/Acrylnitril-Copolymerisat besteht, soll der Acrylnitril-Gehalt der beiden Copolymerisate nicht mehr als 10 Gew.-%, vorzugsweise nicht mehr als 5 Gew.-%, bezogen auf das Copolymerisat, voneinander abweichen. Die Hartkomponente $A_1$ der erfindungsgemäßen Massen besteht jedoch vorzugsweise nur aus einem einzigen Styrol/Acrylnitril-Copolymerisat. Insbesondere dann, wenn bei den Pfropfmischpolymerisationen zur Herstellung der Komponenten $A_2$ als auch bei der Herstellung der zusätzlichen, separat hergestellen Hartkomponenten von dem gleichen Monomer-Gemisch aus Styrol und Acrylnitril ausgegangen wird.

Die Hartkomponente $A_1$ kann nach den herkömmlichen Methoden erhalten werden. So kann die Copolymerisation des Styrols und/oder $\alpha$-Methylstyrols mit dem Acrylnitril in Masse, Lösung, Suspension oder wäßriger Emulsion durchgeführt werden. Die Hartkomponente $A_1$ hat vorzugsweise eine Viskositätszahl von 40 bis 100, insbesondere von 50 bis 85 [ml/g] und ist z. B. im Handel erhältlich.

Komponente $A_2$

Die Komponente $A_2$ repräsentiert mindestens ein Pfropfmischpolymerisat und ist in einem Anteil von 60 bis 20 Gew.-%, insbesondere 20 bis 50 Gew.-%, bezogen auf A, in der Formmasse vorhanden. Sie enthält als Pfropfgrundlage Polybutadien und ferner ein S/AN-Copolymerisat als Pfropfreis. Sie ist aufgebaut aus 40 bis 80 Gew.-%, vorzugsweise 50 bis 70 Gew.-% Polybutadien, und 60 bis 20 Gew.-% des Copolymerisates, jeweils bezogen auf $A_2$.

Die Herstellung des erfindungsgemäßen einzusetzenden Pfropfmischpolymerisats $A_2$ erfolgt in zwei Stufen. Hierzu wird zunächst die Pfropfgrundlage, das Polybutadien hergestellt.

Zunächst wird ein Kautschuklatex auf herkömmliche Weise hergestellt. Der Grundkautschuk ist durch seine Glastemperatur definiert, die unterhalb von — 40 °C, vorzugsweise unterhalb von — 60 °C liegen soll.

Die Polymerisation wird, wie üblich, bei Temperaturen zwischen 30 und 90 °C durchgeführt. Sie erfolgt in Gegenwart von Emulgatoren, wie Alkalisalzen von Alkyl- oder Alkylarylsulfonaten, Alkylsulfaten, Fettalkoholsulfonaten oder Fettsäuren mit 10 bis 30 Kohlenstoffatomen ; vorzugsweise nimmt man Natriumsalze von Alkylsulfonaten oder Fettsäuren mit 12 bis 18 Kohlenstoffatomen. Die Emulgatoren werden in Mengen von 0,3 bis 5, insbesondere von 1,0 bis 2,0 Gew.-%, bezogen auf das Monomere, verwendet. Es werden die üblichen. Puffersalze, wie Natirumbicarbonat und Natriumpyrophosphat, verwendet.

Ebenso werden die üblichen Initiatoren, wie Persulfate oder organische Peroxide mit Reduktionsmitteln verwendet, sowie gegebenenfalls Molekulargewichtsregler, wie Mercaptane, Terpene, oder dimeres $\alpha$-Methylstyrol, die am Anfang oder während der Polymerisation zugegeben werden. Das Gewichtsverhältnis Wasser zu Monomeres liegt vorzugsweise zwischen 2 : 1 und 1 : 1. Die Polymerisation wird so lange fortgesetzt, bis mehr als 90 %, vorzugsweise mehr als 96 % des Monomeren polymerisiert sind. Dieser Umsatz ist im allgemeinen nach 4 bis 20 Stunden erreicht. Der dabei erhaltene Kautschuklatex hat eine Teilchengröße, die unterhalb von 0,10 $\mu$m, vorzugsweise zwischen 0,04 bis 0,08 $\mu$m, liegt. Die Teilchengrößenverteilung solcher Kautschuklatizes ist verhältnismäßig eng, so daß man von einem nahezu monodispersen System sprechen kann.

In einem weiteren Verfahrensschritt wird nun der Kautschuklatex agglomeriert. Dies geschieht z. B. durch Zugabe einer Dispersion eines Acrylesterpolymerisates. Vorzugsweise werden Dispersionen von Copolymerisaten von Acrylestern von Alkoholen mit 1 bis 4 Kohlenstoffatomen, vorzugsweise von Ethylacrylat, mit 0,1 bis 10 Gew.-% wasserlösliche Polymerisate bildenden Monomere, wie Acrylsäure, Methacrylsäure, Acrylamid oder Methacrylamid, N-Methylolmethacrylamid oder N-Vinylpyrrolidon, eigesetzt. Besonders bevorzugt ist ein Copolymerisat aus 96 % Ethylacrylat und 4 % Methacrylamid. Die

3

Agglomerierdispersion kann gegebenenfalls auch mehrere der genannten Acrylesterpolymerisate enthalten.

Die Konzentration der Acrylesterpolymerisate in der Dispersion soll im allgemeinen zwischen 3 und 40 Gew.-% liegen. Bei der Agglomeration werden 0,2 bis 10, vorzugsweise 1 bis 5, Gewichtsteile der Agglomerierdispersion auf 100 Teile des Kautschuklatex, jeweils berechnet auf Feststoffe, eingesetzt. Die Agglomeration wird durch Zugabe der Agglomerierdispersion zum Kautschuk durchgeführt. Die Geschwindigkeit der Zugabe ist normalerweise nicht kritisch, im allgemeinen dauert sie etwa 1 bis 30 Minuten bei einer Temperatur zwischen 20 und 90 °C, vorzugsweise zwischen 30 und 75 °C.

Unter den genannten Bedingungen wird nur ein Teil der Kautschukteilchen agglomeriert, so daß eine bimodale Verteilung entsteht. Dabei liegen nach der Agglomeration im allgemeinen mehr als 50, vorzugsweise von 70 bis 97 % der Teilchen (Zahlen-Verteilung) im nicht agglomerierten Zustand vor. Der mittlere Durchmesser der Kautschukteilchen liegt von 0,20 bis 0,5 $\mu$m ($d_{50}$-Wert der integralen Masseverteilung), vorzugsweise von 0,26 bis 0,35 $\mu$m 30 bis 3 % (Zahlenmittel) der Teilchen sind somit agglomeriert. Der erhaltene agglomerierte Kautschuklatex ist verhältnismäßig stabil, so daß er ohne weiteres gelagert und transportiert werden kann, ohne daß Koagulation eintritt.

Zur Herstellung des Pfropfmischpolymerisates $A_2$ wird dann in einem zweiten Schritt in Gegenwart des agglomerierten Latex des Butadien-Polymerisats ein Monomeren-Gemisch aus Styrol und Acrylnitril polymerisiert, wobei das Gewichtsverhältnis von Styrol zu Acrylnitril in dem Monomeren-Gemisch im Bereich von 75 : 25 bis 65 : 35, vorzugsweise bei 70 : 30, liegen soll. Es ist vorteilhaft, diese Pfropfmischpolymerisation von Styrol und Acrylnitril auf das als Pfropfgrundlage dienende Butadien-Polymerisat wieder in wäßriger Emulsion unter den üblichen, oben aufgeführten Bedingungen durchzuführen. Die Pfropfmischpolymerisation kann zweckmäßig im gleichen System erfolgen wie die Emulsionspolymerisation zur Herstellung der Pfropfgrundlage, wobei, falls notwendig, weiterer Emulgator und Initiator zugegeben werden kann. Das aufzupfropfende Monomeren-Gemisch aus Styrol und Acrylnitril kann dem Reaktionsgemisch auf einmal, absatzweise in mehreren Stufen oder vorzugsweise kontinuierlich während der Polymerisation zugegeben werden. Die Pfropfmischpolymerisation des Gemisches von Styrol und Acrylnitril in Gegenwart des Butadien-Polymerisats wird so geführt, daß ein Pfropfgrad von 20 bis 80 Gew.-%, vorzugsweise von 45 bis 65 Gew.-%, im Pfropfmischpolymerisat $A_2$ resultiert. Da die Pfropfausbeute bei der Pfropfmischpolymerisation nicht 100 %ig ist, muß eine etwas größere Menge des Monomeren-Gemisches aus Styrol und Acrylnitril bei der Pfropfmischpolymerisation eingesetzt werden, als es dem gewünschten Pfropfgrad entspricht. Die Steuerung der Pfropfausbeute bei der Pfropfmischpolymerisation und somit des Pfropfgrades des fertigen Pfropfmischpolymerisats ist jedem Fachmann geläufig und kann beispielsweise u. a. durch die Dosiergeschwindigkeit der Monomeren oder durch Reglerzugabe erfolgen (Chauvel, Daniel, ACS Polymer Preprints 15 (1974), Seite 329 ff.). Bei der Emulsions-Pfropfmischpolymerisation entstehen im allgemeinen etwa 5 bis 15 Gew.-%, bezogen auf das Pfropfmisch-Copolymerisat. Der Anteil des Pfropfmischpolymerisates $A_2$ in dem bei der Pfropfmischpolymerisation erhaltenen Polymerisationsprodukt wird nach der weiter unten angegeben Methode ermittelt.

Die Herstellung derartiger Polymerisate durch Agglomeration wird beispielsweise in der DE-AS 24 27 960 beschrieben. Die erforderliche Teilchengröße von 0,20 bis 0,5 $\mu$m kann jedoch auch ohne Agglomeration auf dem Fachmann bekannte Weise erzeugt werden (Saalatexfahrweise etc. ; vgl. den in der DE-AS 24 27 960 beschriebenen Stand der Technik).

Komponente B

Die Komponente B ist in einem Anteil von 1 bis 20 Gew.-Teilen, vorzugsweise 1,5 bis 7 Gew.-Teilen, und insbesondere 2 bis 6 Gew.-Teilen, jeweils bezogen auf 100 Gew.-Teile von A, in der Formmasse vorhanden.

Als Komponente B kommen übliche Nitrilkautschuke in Betracht, die 5 bis 35 Gew.-%, insbesondere 15 bis 30 Gew.-% Acrylnitril (Rest Butadien) aufweisen. Die Herstellung derartiger AN-Bu-Copolymerisate (Nitrilkautschuke) kann in Emulsion oder Masse erfolgen und ist dem Fachmann bekannt. Als Plastizitätsmaß diente die Mooney-Viskosität nach ASTM D 1646-81. Die anzuwendenden Nitrilkautschuke können Mooney-Viskositäten, gemessen bei 100 °C, von 15 bis 130, insbesondere von 45 bis 100, aufweisen.

Die Herstellung derartiger Kautschuke in Emulsion ist in der US-PS 3 449 470 beschrieben. Ansonsten sind zahlreiche Produkte im Handel erhältlich.

Komponente C

Die erfindungsgemäße Formmasse aus den Komponenten A und B kann als weitere Komponente C Zusatzstoffe enthalten, die für die Ausrüstung von ABS-Polymerisaten üblich sind. Als Zusatzstoffe seien beispielsweise genannt : Füllstoffe, Farbstoffe oder Pigmente, Antistatika, Antioxidantien, Flammschutzmittel und Schmiermittel. Die Zusatzstoffe werden in wirksamen Mengen, vorzugsweise in Mengen von 0,1 bis zu insgesamt etwa 30 Gew.-%, bezogen auf 100 Gew.-Teile der Komponente A, eingesetzt.

Herstellung der erfindungsgemäßen Formmasse

4

Die Mischung der Hartkomponente $A_1$ mit dem bei der Pfropfmischpolymerisation erhaltenen Produkt $A_2$ zu den erfindungsgemäßen Massen kann so vorgenommen werden, daß ein Teil der Hartkomponente $A_1$ zunächst mit Komponente B (gegebenenfalls mit C), und der restliche Teil der Hartkomponente $A_1$ zunächst mit der Komponente $A_2$ gemischt wird, worauf anschließend die beiden Teilmischungen $(A_1 + B)$ und $(A_2 + B)$ zusammengegeben und vermischt werden. Es ist aber auch möglich, zunächst die Komponenten $A_2$ und B zu vermischen und in dieses Gemisch anschließend die separat hergestellte Hartkomponente $A_1$ einzumischen, wobei auch die Reihenfolge umgekehrt werden kann.

Das Mischen der Komponenten $A_1$, $A_2$ und B kann nach allen bekannten Methoden erfolgen. Vorzugsweise geschieht jedoch das Mischen der Komponenten $A_1$, $A_2$ und B durch gemeinsames Extrudieren, Kneten oder Verwalzen der Komponenten, wobei die Komponenten notwendigenfalls zuvor aus der bei der Polymerisation erhaltenen Lösung oder aus der wäßrigen Dispersion isoliert worden sind. Die in wäßriger Dispersion erhaltenen Produkte der Pfropfmischpolymerisation [Komponente $A_2$] können aber auch teilweise entwässert oder direkt als Dispersion mit der Hartmatrix $A_1$ und dem Nitrilkautschuk (Komponente B), vermischt werden, wobei dann während des Vermisches die vollständige Trocknung des Pfropfmischpolymerisats erfolgt.

Die Herstellung der Formmassen gemäß Erfindung erfolgt z. B. bevorzugt dadurch, daß eine Schmelze der Komponente $A_1$ und des Nitrilkautschuks B mit dem Pfropfmischpolymerisat $A_2$ bei Temperaturen über 200 °C intensiv vermischt wird. Sie kann insbesondere dadurch erfolgen, daß man eine Schmelze der Polymerisate $A_1$ und $B_2$ mit einem gefällten Pfropfmischpolymerisat $A_2$, das einen Restwassergehalt von 10 bis 40 Gew.-% aufweist, bei Temperaturen über 180 °C intensiv vermischt, oder daß man die Schmelze aus $A_1$ und B mit einer Dispersion des Pfropfkautschuks $A_2$, die einen Feststoffgehalt von 40 bis 70 Gew.-% aufweist, bei Temperaturen über 180 °C intensiv vermischt.

Die erfindungsgemäßen Formmassen lassen sich nach den für die Thermoplastverarbeitung üblichen Verfahren, wie Extrusion und Spritzgießen, zu den verschiedenartigsten Formkörpern, wie Gehäuse für Haushaltsgeräte, Telefone, Platten, Rohre und Kinderspielzeug verarbeiten. Wie erwähnt, eignen sich die erfindungsgemäßen Massen insbesondere für Anwendungszwecke, bei denen mattes Aussehen erwünscht ist, z. B. im Automobilbau für Kofferraumauskleidungen, Armaturenteile, Belüftungssysteme etc.

Die in den Beispielen und Vergleichsversuchen aufgeführten Produkteigenschaften wurden wie folgt gemessen :

1. Die mittlere Teilchengröße wurde aus der integralen Massenverteilung durch Ultrazentrifugen-Messung bestimmt (W. Scholtan, H. Lange Kolloid Z. und Z. Polymere 250 (1970) 782 bis 796. Unter mittlerer Teilchengröße wird dabei immer der $d_{50}$-Wert der integralen Masseverteilung verstanden.

2. Das Zahlenmittel der Teilchen wird nach Kontrastierung von Proben mit $OsO_4$ durch anschließende Auszählung von Elmi-Aufnahmen bestimmt.

3. Die Ermittlung des Polybutadiengehaltes der Komponente A, bzw. der Pfropfausbeute, und somit des Anteils des Pfropfmischpolymerisats in dem bei der Pfropfmischpolymerisation erhaltenen Produkt erfolgte durch Extraktion dieses Polymerisationsproduktes $A_2$ mit Merhylethylketon bei 25 °C oder durch Extraktion der fertigen Formmasse, wobei die Hartkomponente $A_1$ und die Komponente B gelöst werden. Danach ergibt sich der Pfropfgrad der Pfropfmischpolymerisate, d. h. der prozentuale Anteil vom im Pfropfmischpolymerisat enthaltenen gepropften Styrol und Acrylnitril, am einfachsten aus der elementaranalytischen Bestimmung von Stickstoff (aus Acrylnitril) und Sauerstoff (aus Acrylester) des im Methylethylketon unlöslichen Gel.

4. Die Viskositätszahl der Hartkomponente $A_1$ wird bei 25 °C in 0,5 %iger Dimethylformamidlösung gemessen.

5. Die Mooneyviskosität $ML_4$ der Komponente B wird bei 100 °C nach ASTM D 16 46-81 gemessen.

6. Die Kerbschlagzähigkeit der Massen wurde nach DIN 53 453 an gespritzten Normkleinstäben bei 23 °C ermittelt. Die Spritztemperatur für die Normkleinstäbe betrug dabei 250 °C.

Die Bestimmung der Mattigkeit erfolgte auf dem Lange-Photometer, Typ LMG 014 mit dem 45 °C-Meßkopf. Kenngröße ist die Reflexion des sichtbaren Lichtes in [%] an der Oberfläche spritzgegossener Platten im Vergleich zu einem weißen Fließpapier-Standard mit der willkürlichen Zuordnung 0 % Reflexion.

Zur Herstellung erfindungsgemäßer Formmassen wurden die folgenden Komponenten verwendet :

Hartkomponente $A_1$

Durch kontinuierliche Lösungspolymerisation nach einem Verfahren wie es beispielsweise im Kunststoff-Handbuch, Vieweg-Daumiller, Band V, (Polystyrol), Carl Hanser-Verlag, München 1969, Seite 124, Zeilen 12 ff beschrieben ist, wird ein Copolymerisat, das 65 Teile Styrol und 35 Teile Acrylnitril einpolymerisiert enthält, hergestellt. (Eigenschaften : vgl. Tabelle 1).

Pfropfmischpolymerisat $A_2$

Durch Polymerisation von 55 Teilen Butadien in Gegenwart einer Lösung von 0,5 Teilen tert.-Dodecylmercaptan, 0,7 Teilen K-$C_{14}$-$C_{18}$-Alkylsulfonat als Emulgator, 0,2 Teilen Kaliumperoxodisulfat und 0,2 Teilen Natriumpyrophosphat in 80 Teilen Wasser wird bei 65 °C ein Polybutadienlatex hergestellt. Nach Beendigung der Reaktion wird der Polymerisationsautoklav entspannt. Der Umsatz betrug 98 %.

Es wurde ein Polybutadienlatex erhalten, dessen mittlere Teilchengröße $d_{50}$-Wert bei 0,08 μm liegt. Dieser Latex wird durch Zusatz von 25 Teilen einer Emulsion, eines. Copolymeren aus 96 Teilen Ethylacrylat und 4 Teilen Acrylsäureamid mit einem Feststoffgehalt von 10 Gew.-Teilen agglomeriert, wobei ein Polybutadienlatex mit einer mittleren Teilchengröße von 0,24 μm entstand. 80 % der Teilchen (Zahlenmitel) lagen dabei im nichtagglomerierten Zustand vor (Rest agglomeriert). Nach Zusetzen von 40 Teilen (Bereich von 0,2 bis 0,4) Wasser, 0,4 Teilen K-$C_{14-18}$-Alkylsulfonat und 0,2 Teilen Kaliumperoxidsulfat wurden 48 Teile einer Mischung aus Styrol und Acrylnitril im Verhältnis von 70 : 30 innerhalb von 4 Stunden zugeführt. Die Polymerisation erfolgte unter Rühren des Ansatzes bei 75 °C. Der Umsatz, bezogen auf Styrol-Acrylnitril war praktisch quantitativ. Die erhaltene Pfropfkautschukdispersion wurde mittels Calciumchloridlösung gefällt und das abgetrennte Pfropfmischpolymerisat mit destillierten Wasser gewaschen.

Komponente B

Als Acrylnitrilkautschuke wurden auf dem Markt befindliche Kautschuke eingesetzt. Die Zusammensetzung und Mooney-Viskosität wurden in der nachstehenden Tabelle 1 angegeben.

Tabelle 1

| NBR-Kautschuk | AN | Mooney-Viskosität $ML_4$ |
|---|---|---|
| $B_1$ | 30 | 50 |
| $B_2$ | 20 | 50 |
| $B_3$ | 20 | 60 |
| $B_4$ | 33 | 80 |
| $B_5$ | 33 | 100 |

Die Erfindung wird durch die nachfolgenden Beispiele näher erläutert. Die in den Beispielen genannten Teile und Prozente beziehen sich, sofern nicht anders angegeben, auf das Gewicht.

Beispiele 1 bis 5 und Vergleichsversuch

Aus den in der Tabelle 2 genannten Mengen der Hartkomponente $A_1$ und der Pfropfmischpolymerisate $A_2$ und der Kautschuke $B_1$ bis $B_5$ und 0,2 Teilen eines phenolischen Antioxidans wird auf einem Mischextruder eine Granulatmischung hergestellt. In der Tabelle 2 sind auch die in den genannten Mischungen gemessenen mechanischen und optischen Eigenschaften angeführt.

Aus dem Vergleich der Werte geht hervor, daß die beanspruchten Formmassen mit Glanzwerten unterhalb von 30 % eine mattere Oberfläche und bis auf Beispiel 3 (vermutlich Meßfehler) auch höhere Kerbschlagzähigkeit aufweisen.

Tabelle 2

| | $A_1$ Teile | $A_2$ Teile | B | Teile | Kerbschlag-zähigkeit | Glanz [%] |
|---|---|---|---|---|---|---|
| Vergleichsversuch | 50 | 50 | | | 21 | 60 |
| Bsp. 1 | 57 | 33 | $B_1$ | 10 | 24 | 15 |
| Bsp. 2 | 57 | 33 | $B_2$ | 10 | 25 | 20 |
| Bsp. 3 | 55 | 30 | $B_3$ | 15 | 17 | 30 |
| Bsp. 4 | 55 | 30 | $B_4$ | 15 | 25 | 15 |
| Bsp. 5 | 55 | 30 | $B_5$ | 15 | 23 | 12 |

### Patentansprüche

1. Thermoplastische Formmasse, bestehend aus

A einem schlagfesten Harz, das aufgebaut ist aus

A₁ mindestens einem Copolymerisat in einem Anteil von 40 bis 80 Gew.-%, bezogen auf A, von Styrol und/oder α-Methylstyrol mit Acrylnitril, wobei dieses Copolymerisat 20 bis 40 Gew.-% Acrylnitril einpolymerisiert enthält.

sowie

A₂ mindestens einen Pfropfmischpolymerisat in einem Anteil von 60 bis 20 Gew.-%, bezogen auf A, das Styrol und Acrylnitril im Gewichtsverhältnis von 80/20 bis 65/35 auf mindestens einen, nur aus Butadien aufgebauten, Kautschuk aufgepropft enthält, wobei der Kautschukgehalt 40 bis 80 Gew.-%, bezogen auf A₂, beträgt.

und

B einem aus Acrylnitril und Butadien bestehenden Kautschuk in einem Anteil von 1 bis 20 Gew.-Teilen, bezogen auf 100 Gew.-Teile von A, der aufgebaut ist aus 5 bis 40 Gew.-% Acrylnitril und 95 bis 60 Gew.-% Butadien, jeweils bezogen auf B, dadurch gekennzeichnet, daß das Pfropfmischpolymerisat A₂ durch Emulsionspolymerisation (Pfropfen) von Styrol und Acrylnitril auf einen in Emulsion erzeugten Polybutadienlatex erzeugt wurde, dessen Teilchen vor der Pfropfung in an sich bekannter Weise durch Agglomeration vergrößert worden sind, so daß

70 bis 97 % der Teilchen (Zahlenmittel) im nicht agglomerierten Zustand vorliegen und eine mittlere Teilchengröße (d₅₀-Wert der integralen Masseverteilung) von 0,04 bis 0,08 μm aufweisen

und

30 bis 3 % der Teilchen (Zahlenmittel) im agglomerierten Zustand vorliegen, und eine mittlere Teilchengröße (d₅₀-Wert der integralen Masseverteilung) von 0,20 bis 0,50 μm besitzen.

2. Verwendung der Formmasse nach Anspruch 1 zur Herstellung von Formteilen.

3. Formteile oder Formkörper, hergestellt aus Formmassen gemäß Anspruch 1.

### Claims

1. A thermoplastic molding composition consisting of

A a high-impact resin composed of

A₁ at least one copolymer in a proportion of from 40 to 80 % by weight, based on A, of styrene and/or α-methylstyrene with acrylonitrile, this copolymer containing from 20 to 40 % by weight of acrylonitrile in polymerized form, and

A₂ at least one graft copolymer in a proportion of from 60 to 20 % by weight, based on A, which contains styrene and acrylonitrile in a weight ratio of from 80/20 to 65/35 grafted onto at least one rubber which is solely composed of butadiene, the rubber content being from 40 to 80 % by weight, based on A₂, and

B a rubber which consists of acrylonitrile and butadiene, in a proportion of from 1 to 20 % by weight, based on 100 parts by weight of A, and which is composed of from 5 to 40 % by weight of acrylonitrile and from 95 to 60 % by weight of butadiene, each based on B, wherein graft copolymer A₂ has been produced by emulsion polymerization (grafting) of styrene and acrylonitrile onto a polybutadiene latex which has been produced in emulsion and whose particles have been enlarged in a conventional manner by agglomeration before grafting.

so that

from 70 to 97 % of the particles (number average) are present in a nonagglomerated state and have an average particle size (d₅₀ value of the cumulative weight distribution) of from 0.04 to 0.08 μm

and

from 30 to 3 % of the particles (number average) are present in an agglomerated state and have an average particle size (d₅₀ value of the cumulative weight distribution) of from 0.20 to 0.50 μm.

2. Use of the molding composition as claimed in claim 1 for producing a molding.

3. A molding or molded article produced from a molding composition as claimed in claim 1.

### Revendications

1. Matières à mouler thermoplastiques, qui se composent de

A une résine résistant au choc, qui est constituée de

A₁ au moins un copolymère en une proportion de 40 à 80 % en poids, par rapport à A, du styrène et/ou de l'α-méthylstyrène avec l'acrylonitrile, où ce copolymère contient, en incorporation polymère, de 20 à 40 % en poids d'acrylonitrile.

comme aussi

A$_2$ au moins un copolymère de greffage en une proportion de 60 à 20 % en poids, par rapport à A, qui contient du styrène et de l'acrylonitrile dans la proportion pondérale de 80/20 à 65/35, greffés sur au moins un caoutchouc constitué uniquement de butadiène, ou la teneur en caoutchouc varie de 40 à 80 % en poids, par rapport à A$_2$.
et

B un caoutchouc se composant d'acrylonitrile et de butadiène, en une proportion de 1 à 20 parties en poids, par rapport à 100 parties en poids de A, constitué de 5 à 40 % en poids d'acrylonitrile et de 95 à 60 % en poids de butadiène, chacune de ces proportions se rapportant à B, caractérisées en ce que le copolymère de greffage A$_2$ a été obtenu par polymérisation en émulsion (greffage) du styrène et de l'acrylonitrile sur un latex de polybutadiène obtenu en émulsion, dont les particules ont été grossies de manière en soi connue par agglomération, avant le greffage, si bien que

70 à 97 % des particules (moyenne numérique) se présentent à l'état non aggloméré et manifestent un calibre moyen des particules (valeur d$_{50}$ de la répartition massique intégrale) de 0,04 à 0,08 $\mu$m et

de 30 à 3 % des particules (moyenne numérique) se présentent à l'état aggloméré et possèdent un calibre moyen de particules (valeur d$_{50}$ de la répartition massique intégrale) de 0,20 à 0,50 $\mu$m.

2. Utilisation des matières à mouler suivant la revendication 1 en vue de la fabrication d'articles moulés.

3. Articles moulés ou pièces moulées, obtenus au départ de matières à mouler suivant la revendication 1.